# FASCICULE DE BREVET EUROPEEN

(11) **EP 2 370 936 B1**
(45) Date de publication et mention de la délivrance du brevet: **16.05.2018**
(21) Numéro de dépôt: 09759958.3
(22) Date de dépôt: 27.11.2009
(51) Int. Cl.: G06K 19/077

(54) **OBJET PORTABLE INTELLIGENT COMPORTANT DES DONNÉES DE PERSONNALISATION GRAPHIQUE**
INTELLIGENTES TRAGBARES OBJEKT, DAS GRAFISCHE PERSONALISIERUNGSDATEN UMFASST
Intelligent portable tool comprising graphic customisation data

(30) Priorité: 28.11.2008 EP 08305874
(43) Date de publication de la demande: 05.10.2011
(73) Titulaire: Gemalto SA, 92190 Meudon (FR)
(72) Inventeur: BITON, Philippe, F-13400 Aubagne (FR); MAUNIER, Gérald, F-13011 Marseille (FR); BERGES, William, F-13011 Marseille (FR); BOUCHER, Daniel, Saint-Laurent, Quebec H4N 3M7 (CA)
(74) Mandataire: Milharo, Emilien
(86) Numéro de dépôt international: PCT/EP2009/065975
(87) Numéro de publication internationale: WO 2010/060986

(56) Documents cités:
- EP-A- 1 643 464
- WO-A-2006/023311
- WO-A-2007/003249
- WO-A1-2007/004140
- US-A- 5 884 271
- US-A1- 2006 091 223

## Description

L'invention concerne le domaine des objets personnels portables intelligents comportant des données de personnalisation graphique visibles depuis une face de l'objet.

Elle concerne en particulier le domaine des objets portables de sécurité (ou officiels) permettant une identification visuelle tels que documents d'identité sous forme de carte, feuillets ou autres formats.

Il concerne également en particulier, le domaine des objets de sécurité permettant une identification, authentification de personnes ou de biens personnels, supportant le cas échéant des applications de contrôle d'accès physique d'une personne et/ou logique par rapport à un système informatique. Typiquement, l'objet de sécurité peut être une carte à puce ou avoir une forme de carte à puce.

Par données de personnalisation graphique, on entend des données qui généralement sont imprimées sur des objets portables de sécurité tels que cartes à puce, passeports, carte d'identité, les données spécifiques à un utilisateur, porteur de l'objet, directement ou indirectement liées à lui, les données qui sont susceptibles de changer d'un objet à l'autre lors d'une étape de transfert de données sur l'objet notamment par méthode d'impression graphique lors de la fabrication ou personnalisation de l'objet. Elles sont donc à différencier de données imprimées généralement sur les livres, les revues, les périodiques, des étiquettes. Dans le cadre de l'invention, les données de personnalisation affichées peuvent être fixes comme sur les documents traditionnels (nom, photo, ...), mais aussi variables (age, droit d'accès, crédit, ...) tout en restant attestées par un tiers de confiance (par exemple la carte à puce) pour le compte d'une autorité (état, banque, société...).

L'invention trouve application notamment à la réalisation de transactions électroniques sécurisées telles que des paiements à l'aide d'un objet sécurisé portable. Les paiements peuvent être en local à l'aide de terminaux de paiement ou en ligne sur internet en relation avec des sites et serveurs marchands ou unité de traitement associée distante ou non.

Bien que décrit en relation avec un exemple de transaction financière, le terme transaction désigne ici tout échange bidirectionnel entre l'objet portable et une unité de traitement. De tels échanges permettent par exemple la consultation de base de données, de bases personnelles sécurisées, l'accès à des fichiers partagés, le téléchargement, le contrôle d'accès....

En matière de documents ou titre d'identité, les titulaires sont amenés à avoir plusieurs documents ou cartes spécifiques pour chacune des identifications ou usages tels que permis de conduire, carte santé, carte d'identification, titre de transport. Ces titres, ou documents sont généralement délivrés par une entité ou autorité telle un gouvernement ou son représentant (ambassade, consulat, préfecture, sécurité sociale) et peuvent avoir une durée de vie qui requiert une mise à jour ou renouvellement (carte de séjour, carte santé).

L'émission et le renouvellement de ces documents (imprimés et optionnellement personnalisés électroniquement) effectués parfois par campagne ou individuellement étant longs, fastidieux et onéreux à mettre en oeuvre, l'invention vise notamment à résoudre ces inconvénients.

D'autre part, concernant le domaine du contrôle physique et/ou logique d'accès, les grandes compagnies déploient habituellement les cartes à puce pour le contrôle d'accès logique et/ou le contrôle d'accès physique. Le format ISO avec l'information de l'utilisateur imprimé (photo, nom, identification...) est bien adapté pour l'identification visuelle et pour des systèmes de contrôle d'accès physique radiofréquences à lecteur radiofréquence notamment.

Cependant, ce format ISO n'est pas bien adapté pour des contrôles d'accès logiques, notamment à des systèmes informatiques ou bases de données, car il exige de déployer des lecteurs sur les systèmes de l'utilisateur comme les ordinateurs.

Pour cette raison des clés USB incorporant une carte à puce associée, ont été déployées et ont rapidement été préférées pour le contrôle d'accès logique par simple connexion à un port USB existant de l'ordinateur.

Les inventeurs ont imaginé, qu'en considérant à la fois les contraintes physiques et logiques du contrôle d'accès, le meilleur produit serait une clé USB avec de préférence la carte à puce incorporée, quelques possibilités de communication sans contact et capable de présenter l'identification d'utilisateur pour une identification visuelle.

Toutefois, alors que sur les cartes à puce courantes ISO, la photographie est imprimée sur le corps de carte lui-même, pour permettre la vérification de sécurité de l'utilisateur par un agent de sécurité, sur les clés USB courantes, aucune photo de l'utilisateur n'est montrée à ce jour car des problématiques techniques restent à résoudre (il n'y a guère de place pour une impression graphique sur les clés USB, la forme n'est pas forcément plane et facilement manipulable par une imprimante).

Parmi les objets portables capables d'afficher des informations, on connait aussi des cartes comportant des écrans couvrant une grande partie de la surface de la carte et permettant d'afficher des informations alphanumériques comme des livres électroniques.

Parmi les objets portables intelligents, on connait les cartes à puce pour afficher notamment des soldes de transactions, le contenu d'une mémoire, un numéro OPT (one-time-password en terminologie anglo-saxonne). De telles cartes peuvent être autonomes et avoir une batterie et un bouton pour actionner la génération de l'OTP. Certaines cartes contiennent un afficheur du type papier électronique (E-Paper) ou bistable pour présenter des informations alphanumériques.

On connait aussi des étiquettes électroniques de super marché ou d'étalage comportant un afficheur et ayant une interface capable de recevoir des informations particulièrement de prix et de mise à jour par communication radiofréquence avec une unité centrale de chargement de données.

On connait aussi des appareils portables communicants tels que des dispositifs assistant personnels (PDA) comportant des afficheurs sensitifs tels que "l'Iphone" de la société Apple.

Parmi les applications de transaction électronique, on connait aussi les terminaux de paiement lecteur de carte à puce capables d'effectuer une transaction électronique. De tels terminaux sont susceptibles de présenter des chevaux de Troie et ne présentent pas une garantie et sécurité suffisante pour un utilisateur.

On connait également, les afficheurs sensitifs offrant une interaction totale avec l'utilisateur. D'autre part les afficheurs utilisant la technologie E-Paper (papier électronique) offrent des écrans flexibles.

Le document D1 (US 5 884 271 A1) divulgue une carte à puce intelligente comportant un afficheur permettant à l'utilisateur l'usage d'une pluralité de cartes (cartes bancaires, de transport, de sécurité sociale...).

Le document D2 (WO 2006/023311 A2) divulgue une carte mémoire avec afficheur, l'afficheur permettant d'afficher des informations concernant le contenu de la carte ainsi que des informations concernant le propriétaire de la carte.

Le document D3 (WO 2007/003249 A1) divulgue un document de sécurité (type carte d'identité, carte de sécurité sociale...) comprenant un afficheur. L'afficheur comporte des données d'identification de l'utilisateur de la carte, ces données peuvent être mises à jour sans fil ou connectée à un ordinateur en utilisant un protocole de transfert de données crypté et sécurisé.

L'invention a pour objectif de résoudre les inconvénients précités.

La présente invention a notamment pour objectif de proposer un objet portable comportant une personnalisation graphique visible depuis une face de l'objet et dont la réémission ou le renouvellement est facilité.

Un autre objectif est de proposer un objet de contrôle d'accès physique et/ou logique permettant une authentification visuelle.

Un autre objectif est de proposer des objets de sécurité qui soient pratiques d'emploi.

Un autre objectif est d'autoriser au moins une utilisation autre qu'une seule présentation de la personnalisation graphique, pour notamment des contrôles visuels.

Un autre objectif est d'améliorer la sécurité de transactions électronique.

L'invention consiste dans son principe à concevoir un objet portable de sécurité qui permette une présentation électronique des données graphiques de personnalisation; L'invention consiste également à réaliser la personnalisation graphique de manière électrique.

L'invention consiste également à utiliser la surface réservée à la présentation de données graphiques de personnalisation pour d'autres fonctions notamment présentation d'autres données, interaction (interface homme machine IHM), pavé de signature, clavier code PIN sécurisé, etc...

Les étapes de personnalisation graphique et/ou électrique de supports portables intelligents pouvant être remplacées par une seule étape de personnalisation électrique, ainsi, l'émission et renouvellement d'un document officiel sont facilités, plus rapides et moins onéreux.

A cet effet, l'invention concerne un objet personnel portable intelligent de sécurité comportant des données de personnalisation graphiques visibles depuis une face de l'objet, tel que défini au niveau de la revendication 1. L'homme du métier de la personnalisation graphique a le préjugé d'effectuer une personnalisation graphique uniquement par impression et non de manière électronique; Une grande partie de la sécurité est réalisée par des impressions spécifiques (guilloches, marquage, hologramme ...etc, qui accompagnent notamment la photographie d'une personne).

Selon une caractéristique, l'objet constitue un objet d'authentification visuel d'une personne, les données graphiques comprenant une photographie de la personne.

Comme les documents d'identité ou objet d'authentification, par essence doivent permettre un contrôle visuel d'une autorité à tout moment, l'homme du métier a en principe le préjugé d'une contrainte de présentation permanente du graphisme incompatible avec une présentation électronique; Et à priori, le graphisme ne doit pas être susceptible d'être effacé ou remplacé, ou modifié. Pour cela, des éléments de sécurité sont intimement mélangés avec le graphisme et/ou les supports tels que des guilloches ou des hologrammes, des marquages dissimulés.

Selon une autre caractéristique, l'objet réalise une fonction de contrôle d'accès logique. Ainsi, le même objet assure une double fonction de sécurité de permettre un contrôle d'accès visuel et logique. Les données permettant cette sécurité peuvent être couplées ou appariées ensemble dans un ou deux circuits couplés ou appariés pour plus de sécurité comme expliqué ultérieurement;
Selon une autre caractéristique, les données graphiques sont stockées de manière sécurisée dans des moyens de stockage internes ou externes lui étant reliés; Ainsi, pour le stockage, l'invention utilise de préférence un composant sécurisé par nature physiquement et/ou logiquement telles les puces de carte à puce; les données peuvent être chiffrées dans un composant; L'intégrité ou l'authenticité du composant peut être contrôlée comme expliqué ultérieurement; Le composant peut être dans l'objet ou relié à lui.

Selon un mode de réalisation, l'objet permet outre l'affichage de données graphiques de personnalisation, l'affichage d'autres données; Ainsi, l'objet est particulièrement pratique puisqu'il offre en plus d'une fonction de contrôle visuel celui d'un écran qui peut afficher autre chose en plus ou à la place éventuellement sous certaines conditions.

Dans un mode particulièrement pratique, l'objet représente ou constitue un ou plusieurs documents de sécurité ou officiel(s); un second graphisme stocké peut être également un graphisme de personnalisation. L'objet est pratique puisqu'il regroupe au moins deux documents d'identité ou officiel en un seul support.

Selon d'autres caractéristiques, l'objet est choisi parmi une clé USB (1a), une carte à puce (1c, 1d), un assistant personnel (PDA), un téléphone portable. La clé, assistant et téléphone peuvent comprendre le composant de sécurité sous forme soudé ou connecté, le composant pouvant prendre quant à lui la forme d'un composant ou élément indépendant notamment sous forme de carte à puce, carte SD, MMC....

Grâce à l'invention, un objet personnel intelligent, tel le téléphone portable constitue ou comprend également un objet de personnalisation graphique et/ou authentification visuelle, évitant ainsi, la multiplicité d'objets à porter sur soi.

Il est également pratique dans la mesure où grâce à l'invention, on utilise une surface qui était réservée antérieurement à la présentation d'une photographie ou autres données graphiques imprimées, à au moins un deuxième usage qui est la présentation d'autres informations. Il est donc inutile d'avoir deux objets distincts, par exemple, d'une part un badge et d'autre part un dispositif contenant un afficheur. L'invention permet de réunir ces deux dispositifs en un seul.

Selon d'autres caractéristiques, l'objet comporte des moyens de contrôle d'affichage (100, 200) aptes à maintenir ou à revenir à un affichage des données de personnalisation graphique prioritaires dans certaines conditions prédéterminées;

Les moyens de contrôle d'affichage comportent des moyens de configuration et/ou détection des conditions prédéterminées telles que niveau de batterie faible, défaillance mécanique, position verticale, micro affichage ou affichage multiple, connexion à source d'énergie.

Selon d'autres caractéristiques, l'objet personnel comporte des moyens de configuration et/ou détection des conditions prédéterminées telles que niveau de batterie faible, défaillance mécanique, position verticale, micro affichage ou affichage multiple, connexion à source d'énergie.

Selon d'autres caractéristiques,
- l'afficheur est bistable tel que le papier électronique (E-Paper); l'afficheur est sensitif; l'afficheur comprend ou constitue l'objet ci-dessus.

L'invention a également pour objet un procédé de personnalisation graphique d'objet personnel portable intelligent de sécurité, ledit procédé comportant une étape consistant à transférer des données de personnalisation graphiques visibles depuis une face de l'objet; Le procédé se distingue en ce que les données graphiques sont transférées sous forme numérique et/ou sous forme de marquage de personnalisation, sur l'objet ci-dessus et les données numériques sont présentées vis à vis de l'extérieur par affichage électronique.

L'invention a également pour objet un dispositif comportant une interface connectée à un afficheur; il se distingue en ce que l'afficheur comprend l'objet ci-dessus.; L'afficheur peut être amovible par rapport au dispositif et constituer un afficheur supplémentaire du dispositif et/ou son propre unique afficheur.

L'invention a également pour objet une utilisation de l'objet portable ci-dessus conforme ou obtenu,
- à la réalisation de transactions électroniques sécurisées;
- et/ou à l'authentification et contrôle visuel d'au moins une personne;
- et/ou au contrôle d'accès logique d'au moins un utilisateur.
- et/ou à l'affichage de données autres que données de personnalisation graphiques;
- et/ou à la signature électronique.

Pour réaliser une transaction électronique comprenant un échange de données entre une unité de traitement distante connectée à un objet portable, la transaction mettant en oeuvre une étape d'affichage pour présenter tout ou partie d'informations utiles à la transaction à un utilisateur et/ou une étape d'interaction entre la carte et l'utilisateur, l'affichage et/ou l'interaction étant réalisée(s) via ledit afficheur interactif.

Ainsi l'invention permet à un utilisateur d'avoir un objet portable à la fois pour l'identification physique, le contrôle visuel d'accès physique et le contrôle électronique d'accès logique notamment par simple connexion dans un port existant ou autre.

Un document servant à la fois pour de multiples identifications ou utilisations est facile d'emploi et peut être interactif avec l'utilisateur (par exemple l'utilisateur pourrait voir les points restants de son permis de conduire ou ses prescriptions ou ordonnances de médicaments ou de soins.

Des informations communes destinées à être présentées telles qu'une photo d'identité ou tout autre photographie, l'adresse, la date de naissance, les allergies, le groupe sanguin... peuvent être contenus dans un fichier électronique et être partagées par plusieurs applications d'identification ou de présentation d'informations. Le contenu peut être interactivement montré à la demande de l'utilisateur ou autre organe, personne telle un contrôleur, douanier, banque, bureau de sécurité sociale, police...

L'affichage pourrait également être employé pour effectuer une signature numérique (affichage d'extrait de transaction contrôlé par la carte à puce), génération d'un OTP en mode connecté ou non.

D'autres particularités et avantages de l'invention apparaîtront à la lecture de la description, faite à titre d'exemple non limitatif et en regard des dessins annexés sur lesquels :
- La figure 1 illustre schématiquement un mode de réalisation de l'objet conforme à l'invention;
- La figure 2 illustre un schéma en coupe A-A de l'objet de la figure 1;
- La figure 3 illustre une utilisation de l'objet en position verticale;
- La figure 4 illustre une utilisation de l'invention pour un accès logique ou transaction électronique;
- La figure 5 illustre schématiquement un second mode de réalisation de l'objet conforme à l'invention, associé à une carte étant en cours d'introduction en position fonctionnelle;
- La figure 6 illustre un schéma en coupe longitudinale de l'objet de la figure 5, la carte étant en position fonctionnelle;
- La figure 7 illustre l'objet de l'invention selon un troisième mode de réalisation sous forme de carte;
- La figure 8 illustre l'objet de l'invention selon un quatrième mode de réalisation sous forme de carte avec des moyens de navigation, interface et source d'énergie autonome;
- La figure 9 illustre schématiquement un cinquième mode de réalisation de l'objet conforme à l'invention;
- La figure 10 et 11 illustrent respectivement des étapes d'un procédé ou de programme mises en oeuvre par l'objet de l'invention en cas de mode d'affichage prioritaire ou non prioritaire;

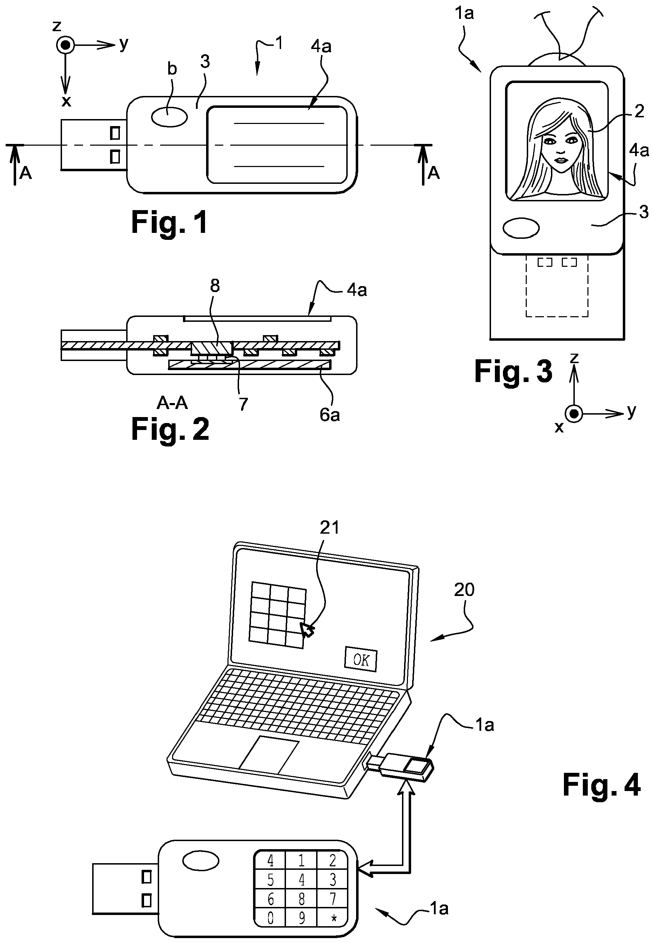

A la figure 1, un objet personnel portable intelligent 1, 1a se présente sous la forme d'une clé USB, mais il peut se présenter sous d'autres formes telles une carte à puce comme illustrées par la suite.

L'objet comporte des données de personnalisation graphique 2 visibles à l'oeil humain depuis une face 3 de l'objet. Les données préférées de personnalisation sont ici une photographie de l'utilisateur ou du porteur de la clé. Les données peuvent comprendre également des informations propres au porteur tel le nom, un numéro d'identifiant, le nom de la société, le service auquel il est rattachée.

De telles données qui étaient, de manière connue, susceptibles d'être habituellement imprimées directement sur la coque de l'objet à l'extérieur ou dans un support papier glissé dedans sous une fenêtre transparente, sont conformément à une caractéristique de l'invention, présentées par affichage électronique.

A cet effet, l'objet comporte des moyens d'affichage tels qu'un écran 4, 4a et un microcontrôleur d'affichage, de préférence, de type graphique pour gérer l'affichage. L'affichage du portrait de l'utilisateur permet de contrôler visuellement que le porteur est la bonne personne au même titre qu'un badge d'entreprise avec photographie.

L'objet est de préférence apte à effectuer aussi un contrôle d'accès logique. L'accès logique est notamment l'accès à un réseau ou à des données stockées et gérées par droits d'accès, une connexion via un ordinateur dont il contrôle l'utilisation par vérification d'un code PIN, ou mot de passe.

Des droits d'usage, d'accès, protégés le cas échéant par clés de chiffrement peuvent être introduits dans un composant fixé au PCB ou dans un support associé qui lui est relié tel une carte à puce (6a); Des données graphiques à afficher peuvent être mémorisées dans le même composant ou autre composant apparié à celui contenant les droits d'accès. Le composant est ici une puce de circuit intégré.

Ainsi en cas de substitution de la puce contenant les données graphiques, tout ou partie des droits assurant la sécurité et le fonctionnement de l'objet portable (droits d'accès, mot de passe, clés de chiffrement, etc.) sont également éliminés, rendant ainsi l'objet portable contrefait inutilisable pour un accès logique.

Un appairage entre la carte 6 ou 6a et la clé 1, 1a ou autre objet peut requérir notamment des moyens pour réaliser une authentification mutuelle entre objets appariés et/ou un partage de fonctions nécessaires au fonctionnement de l'objet; L'objet 1, 1a comporte des moyens aptes à maintenir ou à revenir à un mode d'affichage prioritaire des données de personnalisation graphiques, dans certaines conditions d'usage, notamment un niveau de batterie faible. En particulier, lorsque l'objet se trouve dans une position particulière de préférence verticale dans la direction Z (selon le repère X, Y, Z), cela signifie qu'il est utilisé en fonction badge et la photographie est automatiquement affichée à l'écran. Pour cela, des moyens de détection, notamment de type gyroscopique, renseignent un microcontrôleur de l'objet qui en réponse commande l'affichage du portrait. Dès que l'objet sort de la position verticale, le portrait peut être remplacé pour une autre utilisation.

Dans une autre utilisation, notamment horizontale (plan X, Y), ou différente de verticale, cela peut signifier que le dispositif n'est pas en utilisation et dans ce cas l'affichage du portrait est mis en mode veille ou économie de manière notamment à économiser l'énergie.

L'objet peut également comporter des moyens de détection de conditions particulières d'utilisation ou conditions environnementales. Ainsi en cas de batterie faible ou de défaillance mécanique. L'objet peut passer en un autre mode tel qu'un mode de sauvegarde ou mode prioritaire ou mode de micro affichage. Ce mode peut être préprogrammé ou sélectionné dans un menu interactif.

Un mode de micro affichage ou d'affichage forcé de données graphiques prioritaire peut être imposé par le microcontrôleur lorsque l'on se trouve dans un des cas détecté ci-dessus.

Ainsi la fonction essentielle de contrôle d'accès physique de l'objet peut toujours être maintenue même en cas d'énergie faible dès l'instant où un niveau de batterie en dessous d'un seuil donné est détecté.

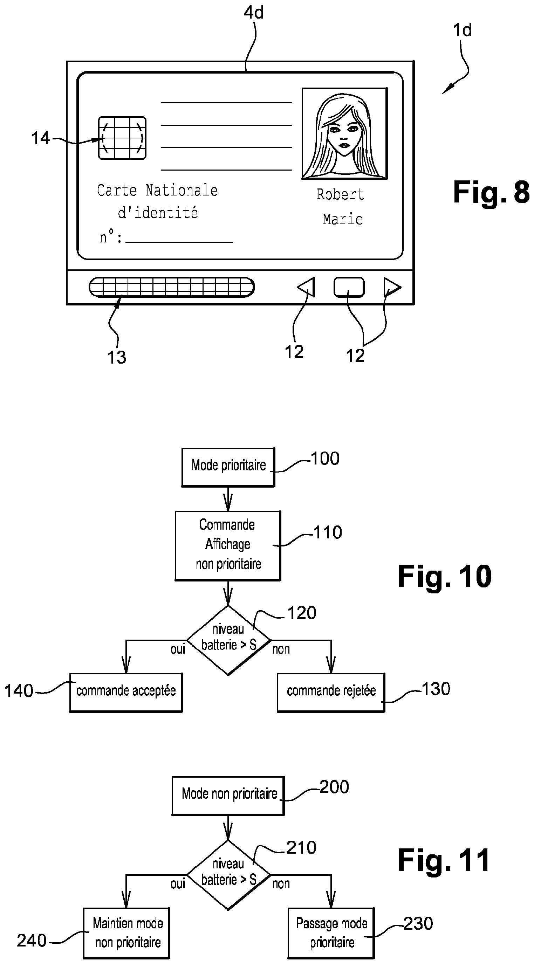

Lorsque ce mode est enclenché et est intervenu, il n'est en principe plus possible de changer l'affichage volontairement par actionnement de bouton b ou autres moyens interactifs 12 par exemple comme à la figure (fig.8).

L'afficheur peut être choisi parmi une technologie dite de papier électronique (E-Paper) ou avec des cristaux liquides bistables qui ont l'avantage de consommer peu ou pas d'énergie.

Selon une caractéristique, l'afficheur est avantageusement sensitif, ce qui permet non seulement de gagner de la place pour l'écran sur une face visible de l'objet mais aussi de sécuriser des échanges comme on le verra par la suite.

A la place d'une personnalisation graphique, l'objet personnel subit une personnalisation électrique pour charger les données spécifiques au porteur, mais aussi des données pour autoriser des accès logiques, une sécurité (clés privés, droits, etc.)

Selon un mode de réalisation pratique, l'objet fonctionne en tout ou partie avec un autre objet associé, tel une carte à puce 6a qui lui est connectée notamment par un connecteur 8 sur une interface à contacts électriques 7 voire radiofréquence ou autre.

Dans ce cas, il est préféré d'effectuer la personnalisation électrique ci-dessus directement sur l'objet surtout quand celui-ci est une carte à puce en bénéficiant de l'outil de personnalisation plus adapté du domaine de la carte à puce.

La carte est ensuite insérée dans un logement de l'objet notamment par une fente arrière. La carte à puce peut assurer aussi des fonctions de contrôle d'accès logique en toute sécurité grâce à sa structure particulièrement adaptée et clés de chiffrement et/ou algorithmes qu'elle est en mesure de mettre en oeuvre. L'afficheur de la carte est centré sur l'ouverture de manière que l'on ne distingue pas qu'il s'agit d'une carte.

A la figure 4, une utilisation de la clé USB permet de saisir en toute sécurité des données à l'écran d'un ordinateur 20. Les données sont ici un code PIN nécessaire pour réaliser une transaction, notamment sur internet.

Au cours de la transaction, une fenêtre est affichée sur l'écran de l'ordinateur et représente ici un clavier de PIN code sans affichage des numéros dans les cases.

Parallèlement, la clé conforme à l'invention est reliée à un port de l'ordinateur et reçoit des données pour l'affichage du clavier réel qui s'affiche sur l'écran de la clé 1a.

La transmission du clavier réel a pu nécessiter la mise en oeuvre d'opérations préalables de sécurité de type connues comme établissement d'une session de communication sécurisée avec l'émetteur du clavier de PIN code, une authentification de l'objet par une banque ou autre autorité, une étape de déchiffrement du clavier chiffré par une clé de chiffrement contenue au préalable ou générée sur l'instant.

Ainsi, pour taper son code PIN sur l'écran de l'ordinateur, l'utilisateur utilise le pointeur 21 de la souris d'ordinateur pour sélectionner et cliquer dans les cases correspondant à celles dévoilées par la clé. L'utilisateur évite ainsi d'éventuelles attaques de son code PIN par l'intermédiaire du clavier, du pointeur de souris, ou de l'écran.

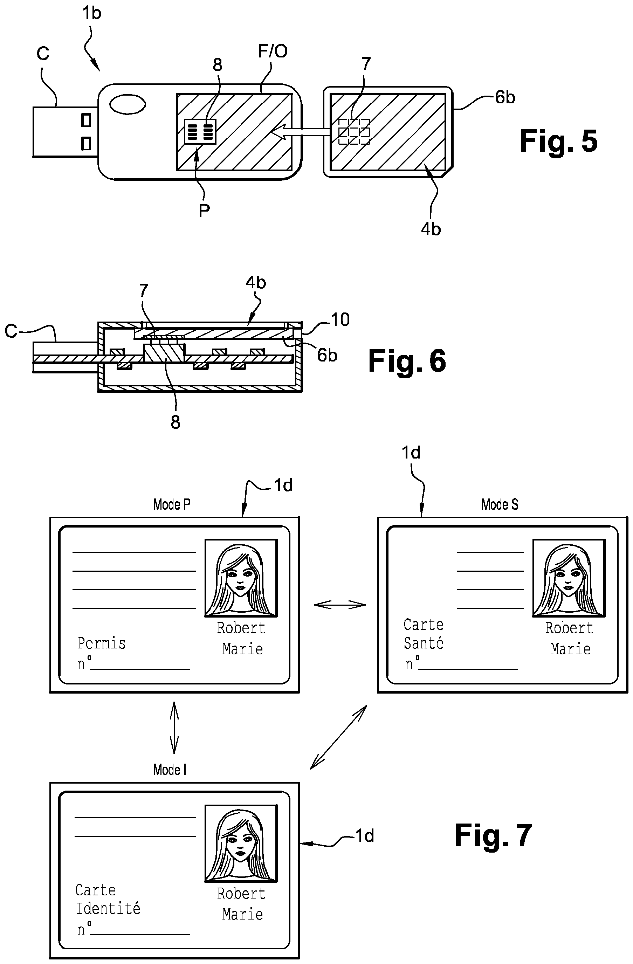

Dans un mode plus perfectionné, l'afficheur de l'objet est interactif comme dans l'exemple des figures 5, 6 ou 8. La session de transaction peut s'effectuer comme précédemment ou de préférence directement entre une autorité (serveur sécurisé) et l'objet de l'invention.

Le clavier est affiché sur l'écran interactif et l'utilisateur sélectionne ou tape son code directement à l'écran de l'objet au lieu de le sélectionner sur l'écran de l'ordinateur. Cela permet d'améliorer encore plus la sécurité car la sélection s'effectue à même dans un objet de confiance et à même la carte à puce. Le code PIN tapé est pris par la carte et la transaction chiffrée par la carte avant de la transmettre directement à l'autorité.

Une communication peut s'établir directement entre l'objet et un serveur distant ou être relayé par un terminal servant d'interface. En particulier, la carte peut mettre en oeuvre un protocole IP pour dialoguer sur internet ou être lu par un terminal. Ce mode perfectionné de réalisation peut ne pas requérir un affichage de données de personnalisation graphique, comme un portrait.

A cet effet, pour une utilisation à des transactions électroniques sécurisées au sens large, (financières ou non), l'objet peut comprendre un module ou composant de sécurité tel qu'une puce de circuit intégré du type de celle des cartes à puce. Ce composant comporte notamment des moyens de chiffrement et espace mémoire de stockage de clé et ou algorithme de chiffrement déchiffrement dont l'accès est protégé. Le cas échéant, il comporte des moyens de génération de clé ou de numéro de type OTP à usage unique et dans le temps.

Ce composant est de sécurité notamment de part sa capacité à résister à des attaques physiques et/ou logiques notamment tel des chevaux de Troie. Ce composant peut être soudé sur un circuit ou connecté autrement pour constituer l'objet de l'invention. Ainsi par exemple, un assistant personnel PDA avec écran interactif ou du type comparable à l'appareil interactif communicant "iPhone" de la société Apple peut servir de base à la réalisation de l'invention ou du moins au mode ci-dessus en comportant le composant décrit ci-dessus et les fonctions ci-dessus.

De manière encore plus pratique, selon une variante préférée illustrée à la figure 5, c'est la carte 6b associée à l'objet portable 1b tel une clé USB, qui comprend un afficheur 4b et qui réalise des affichages pour l'objet portable.

La carte est par exemple introduite dans l'objet récepteur par un accès adapté, ici une fente 10 à l'arrière du corps de l'objet. Elle est connectée de manière connue à un circuit électronique de l'objet notamment par un connecteur 8 reliant des plages de contact électrique 7. La carte peut être introduite et positionnée dans l'objet portable d'accueil de telle manière que l'on ne distingue pas que l'écran est supporté par une carte amovible. Notamment parce que seul l'écran est visible suite à un centrage de celui-ci dans une fenêtre ou ouverture de l'objet d'accueil.

Les droits d'accès logique, notamment abonnement d'un opérateur de télécommunication pour une application de radiotéléphonie, droits d'accès à un service marchand quelconque sont dans la carte; ils peuvent aussi être dans la clé ou réparties entre les deux. Des moyens de connexion C, notamment ici un connecteur USB, permettent d'établir une connexion avec des moyens externes pour effectuer un contrôle d'accès logique.

La carte affiche les données de personnalisation avec son afficheur propre 4b; Elle est introduite dans un espace de la clé et se trouve en position fonctionnelle pour d'une part se connecter à la clé et d'autre part, pour centrer son afficheur 4b en regard d'une délimitation de fenêtre F/O qui peut être ouverte ou, comme ici dans l'exemple, fermée par une paroi transparente P.

La carte permet donc un contrôle physique des accès par visualisation du portrait du porteur.

L'invention permet un contrôle d'accès physique mettant en oeuvre une double étape de contrôle. Le contrôle d'accès physique comprend un contrôle d'authentification du titulaire par l'objet portable, notamment par biométrie, et un contrôle d'accès physique de droits d'accès contenus dans l'objet portable.

Le cas échéant, l'objet peut comporter un capteur de type biométrique ou un capteur d'empreinte pour vérifier à des instants choisis ou aléatoire la présence du vrai porteur. Pour éviter des fraudes consistant à dérober l'objet pour accéder à des locaux accessibles notamment par présentation de badge sans contact à une borne radiofréquence et par contrôle visuel d'une personne représentant une autorité, l'invention permet ce double contrôle d'accès, le porteur présentant non seulement sa photo et mais aussi effectuant une confirmation de présence par biométrie sur le lieu de contrôle par une autorité.

En cas d'échec d'une authentification biométrique par l'objet, un indicateur permet de savoir qu'il y a fraude, par exemple en verrouillant l'accès logique, en affichant notamment un message "erreur authentification" sur l'écran de l'objet notamment celui de la carte ou en verrouillant logiquement la carte. Le message ou verrou logique étant perceptible par les moyens de contrôle humain ou électronique.

L'objet portable peut être alimenté par ailleurs autrement que par radiofréquence et autorisé au moins pendant un bref instant un contrôle d'accès physique subséquent par une borne d'accès. Alternativement, le porteur s'authentifie vis à vis de la carte devant une borne notamment radiofréquence de manière à collecter de l'énergie pour un traitement d'authentification notamment biométrique.et expose l'objet à la borne pour un contrôle des droits d'accès. L'accès est donné si les droits d'accès sont présents et si le titulaire a été correctement authentifié.

En alternative, le porteur présente sa carte devant une borne de contrôle d'accès radiofréquence. L'empreinte du titulaire est prélevée par la carte sur l'instant grâce notamment à l'énergie du lecteur communiqué à la carte sans contact; la carte communique l'empreinte prélevée ainsi qu'une empreinte de personnalisation pré-stockée dans la carte au lecteur pour lui permettre d'effectuer une comparaison et autoriser l'accès le cas échéant si le lecteur a trouvé les d'accès dans la carte au cours d'un échange radiofréquence. Bien entendu, la carte (ou objet portable) comprend l'interface et moyens de communication sans contact appropriés.

A la figure 7, selon un autre mode de réalisation, l'objet prend la forme d'une carte à puce 1d. La carte comprend un afficheur qui couvre sensiblement la totalité ou quasi totalité de la surface de la carte, par exemple 90 à 100 % de sa surface.

L'afficheur est choisi parmi une technologie de papier électronique (E-Paper) qui a l'avantage de ne pas consommer d'énergie pour le maintien de l'affichage.

La carte comprend un microcircuit pour interfacer 14 avec des moyens de personnalisation graphique mais conformément à l'invention, cette opération généralement réalisée par moyens d'impression classique (jet d'encre, offset, sérigraphie...) est ici réalisée par voie électrique ou radiofréquence. Les données sont transférées sous forme numérique et présentées vis à vis de l'extérieur par affichage électronique.

La carte peut comprendre une batterie ou des moyens permettant de recevoir de l'énergie pour changer l'affichage au moins au cours de l'étape de personnalisation graphique.

La batterie peut être rechargeable, la carte peut comprendre le cas échéant des moyens de collecte d'énergie comme des capteurs photovoltaïques 13. Un simple éclairage par lampe électrique notamment au cours d'un contrôle permet l'affichage ou un changement d'affichage. Alternativement, la carte peut comprendre d'autres moyens d'alimentations qui peuvent aussi servir de communication comme une antenne radiofréquence. Ainsi, à un poste de contrôle, il suffit d'envoyer de l'énergie et éventuellement un code pour l'affichage des données graphiques à contrôler.

Une telle carte constitue de préférence un objet d'authentification visuel d'une personne en affichant notamment son portrait et permettre d'effectuer un contrôle d'accès physique.

La carte peut également être utilisée pour effectuer un contrôle d'accès logique ou un contrôle électronique comme les passeports électroniques.

Afin de garantir que le contrôleur d'affichage n'a pas été substitué par un faux, l'invention peut comprendre des moyens d'authentification électroniques, par exemple pour mettre en oeuvre une procédure d'authentification entre un lecteur approprié et la puce présente dans la carte afin d'assurer un contrôle visuel et électronique. Le cas échéant, un numéro peut être gravé imprimé ou affiché sur la carte et participe à l'authentification de la carte comme les passeports électroniques.

L'interface peut être à contact ou sans contact notamment radiofréquence. Dans l'exemple, un contrôleur graphique pilote l'affichage des données et une puce contrôle l'interface avec l'extérieur. La puce peut comprendre le cas échéant, une micro antenne réalisée sur elle-même, notamment gravée ou intégrée sur du silicium. Au cours d'une personnalisation, les deux contrôleurs (graphique et celui de la puce ayant l'interface externe) peuvent mettre en oeuvre une procédure d'authentification préalable entre eux de manière à permettre un changement de l'affichage ou autoriser l'affichage. Un seul composant réalise, le cas échéant, les deux fonctions ci-dessus.

Dans un mode de réalisation, l'objet comprend des moyens interactifs pour interagir avec l'utilisateur. En particulier, ces moyens peuvent comprendre des boutons de navigation 12 (figure 8) permettant de changer l'affichage ou mode de fonctionnement de la carte.

Conformément à une caractéristique, l'objet est apte à afficher au moins deux graphismes correspondant chacun un document différent. Ces deux graphismes peuvent constituer au moins 2 documents propres au titulaire tel document d'identité et document santé ou autre document officiel émanant d'une autorité.

Revenant à la figure 8, la carte 1d est en mode "I" et constitue un document d'identité : carte de séjour, passeport, carte d'identité et dans ce mode, sont affichées toutes les informations nécessaires et notamment une photo et numéro, adresse, date de naissance, date de validité etc.;
En réponse à une pression manuelle sur au moins un des boutons 12, le contrôleur de la carte fait afficher un autre mode P et un autre document officiel d'identité apparait, en l'occurrence un permis de conduire ; Une autre pression sur le bouton fait passer en mode S qui correspond à l'affichage des données nécessaires à une carte santé.

Ainsi, un seul document ou support permet de remplacer plusieurs supports visuels qui étaient contenus dans le portefeuille d'un titulaire.

De manière avantageuse, le fichier photographique n'est pas modifié et est partagé par les autres modes contribuant ainsi à moins consommer. D'autres données peuvent être communes comme le nom, l'adresse etc.

Les données spécifiques comme "Permis", "Santé", "Identité", "date de validité", "numéro de la carte" peuvent être dans des fichiers distincts et affichés à la demande tandis que les autres données non communes ne le sont plus.

Avantageusement, les moyens interactifs sont sensitifs et sont constitués par une couche sensitive placée en regard de l'afficheur et de préférence en dessous. Dans un exemple, on passe d'un affichage ou mode P, S, I à l'autre par pression successive sur l'écran sensitif ou autre interrupteur placé notamment au verso de l'objet. La photo ou données prioritaire(s), par exemple relative(s) à l'identité, peut revenir d'elle-même à l'affichage après un temps prédéterminé de non utilisation ou pression sur une commande de changement d'affichage. L'objet comprend un programme et mécanisme adéquat réalisant cette fonction ci-dessus.

Les documents d'identité étant par essence destinés à afficher en permanence pour un contrôle à tout moment, l'invention prévoit un mode de réalisation où l'écran peut quand même afficher autre chose comme indiqué ci-dessous.

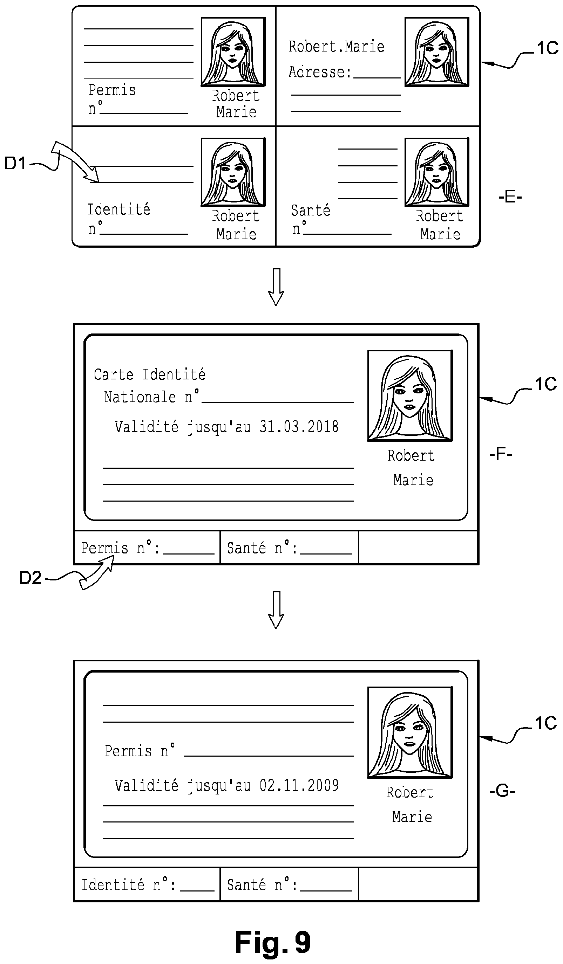

Selon ce mode illustré à la figure 9, la carte présente des mini fenêtres contenant chaque document à un format réduit. Ces fenêtres peuvent être lues à l'oeil nu ou à la limite à l'aide d'une loupe si nécessaire. La réduction peut toutefois être réalisée de manière à permettre une lecture normale. Ces formats peuvent comprendre des données essentielles de chaque document comme un numéro consultable par ailleurs sur une base par une autorité.

Par pression sur une des fenêtres interactives, notamment la fenêtre "identité" dans l'exemple D1, la carte agrandit le format du document d'identité sélectionné de la configuration E à une configuration F. Les autres fenêtres relatives au "Permis", et "santé" peuvent être réduites notamment en marge inférieure. Un numéro permettant de retrouver les données dans une base demeure affiché dans la marge.

A partir de cette configuration F de la carte, il est possible d'afficher le permis en appuyant (D2) dans un onglet ou fenêtre correspondant conduisant ainsi à l'affichage en grand format du permis dans la configuration G.

La carte peut comprendre un mode veille dans lequel après un certain temps sans utilisation, la carte affiche une configuration par défaut ou prioritaire par exemple E. La carte pourrait aussi afficher par défaut un des documents tel que la carte d'identité à un format plus grand.

Selon une autre caractéristique, l'objet peut comprendre des moyens de réduction / agrandissement pour effectuer une réduction / agrandissement de format des éléments graphiques.

Par exemple, la carte est divisée en 4 zones pour quatre applications (identité, santé, permis, fidélité; Lorsqu'une utilisation est privilégiée ou prioritaire (identité), une sélection (notamment par pression sur une zone de l'écran), agrandit la zone sélectionnée au détriment des autres sauf celle éventuellement prioritaire. Ainsi, on permet une utilisation multiple avec maintien permanent d'un affichage des données essentielles de chaque application.

La figure 10 illustre des étapes d'un procédé ou d'un programme mis en oeuvre par l'invention pour maintenir ou revenir à un affichage des données de personnalisation graphiques prioritaire dans certaines conditions d'usage. La condition d'usage est un niveau d'énergie mais pourrait être tout autre critère permettant de gérer l'affichage de deux documents ou applications concurrentes.
- A l'étape 100, la carte affiche un mode prioritaire tel un document d'identité alors que la batterie est assez faible;
- A l'étape 110, le porteur interagit pour faire afficher autre chose et par conséquent faire disparaitre au moins une partie des données d'identité. Par exemple, une photo de vacances ou un autre document tel que permis ou toute autre information stockée dans la mémoire de l'objet;
- A l'étape 120 en réponse à la commande de changement d'affichage, la carte procède, via son microcontrôleur, à un test de niveau de batterie ou à un test de niveau d'énergie selon que la carte est ou non connectée ou alimentée. Un circuit de mesure de tension ou courant est alors prévu dans la carte notamment dans la puce pour renseigner le microcontrôleur;

- A l'étape 130, le test étant négatif, (niveau de batterie insuffisant), la commande de changement d'affichage est rejeté et le mode prioritaire conservé affiché notamment grâce à la technologie de papier électronique E-Paper bistable sans apport d'énergie;
- A l'étape 140, le test est positif (niveau de batterie supérieur au seuil), la commande d'affichage d'une autre fonction provoquant l'effacement des données prioritaire est acceptée.

La figure 11 illustre des étapes d'un procédé ou d'un programme mis en oeuvre par l'invention pour revenir à un affichage des données de personnalisation graphiques prioritaire dans certaines conditions d'usage comme précédemment;
- A l'étape 200, la carte affiche un mode non prioritaire tel un solde de crédit de communication alors que la batterie est assez faible mais supérieure au seuil;
- A l'étape 210, un test de niveau de batterie peut être effectué périodiquement par exemple;
- A l'étape 230, le test ayant été négatif (batterie trop faible par rapport au seuil) la carte passe alors en mode prioritaire pour afficher de nouveau le document d'identité prioritaire;
- A l'étape 240, le test étant positif, (niveau de batterie largement suffisant), la carte maintient l'affichage ou autre utilisation de l'afficheur à d'autres fins que les données prioritaires.

### D'autres avantages ou fonctions sont rappelées ci-après :

- L'invention peut garantir toujours un affichage minimum notamment par micro fenêtre avec des afficheurs de type bistable ou rémanent, tel que papier électronique (E-Paper);

En cas de panne de batterie ou autre défaillance et affichage réduit, il suffit d'avoir un moyen d'agrandissement pour vérifier les documents à afficheur électronique;
- L'objet peut comprendre des moyens de collecte d'énergie, photovoltaïque, antenne de transpondeur; En cas de contrôle à l'aide d'une source d'énergie, telle une lampe, un lecteur ou borne radiofréquence, pour apporter respectivement de l'énergie à des cellules photovoltaïques ou à un transpondeur sans contact de l'objet, il est possible de faire fonctionner l'objet et afficher les données voulues;
- Dans un autre mode, des moyens de contrôle du niveau de batterie déclenchent eux-mêmes un mode d'affichage par défaut présentant des données graphiques essentielles prédéterminées, lorsque le niveau de la batterie atteint un seuil;
- L'afficheur est interactif, notamment sensitif. Ce cas est particulièrement pratique car il libère de la surface de l'objet pour l'affichage; D'autre part, il permet, dans le cas précédent des mini fenêtres, de sélectionner le graphisme à agrandir au détriment des autres par simple contact ou pression sur une zone correspondante;
- L'aspect interactif de l'écran permet aussi d'améliorer la sécurité de transaction éventuelles faisant intervenir l'affichage et/ou saisie de données personnelles telle que PIN code, OTP...
- Pour afficher une photo d'un utilisateur sur l'objet, on utilise un écran et une source d'énergie de l'objet (adaptateur de courant A.C, câble USB, ou batterie en mode non relié). Un fichier contenant la photo de l'utilisateur auquel appartient l'objet devra être stocké sur la carte à puce notamment pendant l'étape de personnalisation de la carte. L'objet peut alors lire cette information pour l'afficher sur son écran incorporé.
- Le même écran peut également être utilisé pour montrer n'importe quel autre genre d'information : une valeur d'OTP, un menu, le nom de l'utilisateur, identifiant de l'utilisateur, identifiant de l'objet, contre-valeur, un rapport de transaction de paiement, etc.
- Comme l'objet est souvent relié à un port sous tension (par exemple. USB), la batterie de l'objet peut être rechargée en utilisant la puissance fournie par le port quand l'objet est relié à l'ordinateur;
- En mode de fonctionnement sous batterie, la consommation peut être optimisée par exemple en montrant la photo seulement quand l'utilisateur pousse un bouton (dans ce cas, l'affichage de la photo est sur demande) ou en permettant l'affichage de photo seulement quand l'objet est en position verticale (autour du cou de l'utilisateur par exemple en cas d'une utilisation comme badge) ou en permettant l'affichage de photo seulement quand il est relié à un ordinateur ou dispositif de contrôle;
- L'objet portable peut comporter un écran interactif apte à afficher une partie au moins des données utiles à la transaction. Les données saisies par l'utilisateur peuvent être envoyées directement de l'objet portable de confiance à une unité de traitement de confiance notamment d'un organisme émetteur de l'objet ou l'accréditant. De même, les données émises de l'unité de traitement de confiance sont reçues directement par l'objet portable.

Ainsi, l'afficheur interactif, par exemple sensitif au toucher, permet de réaliser la transaction directement entre la carte à puce et une unité de traitement, en rendant plus difficile des attaques frauduleuses et améliorant ainsi la sécurité. Le cas échéant, un protocole de communication sécurisé, notamment chiffré peut être partagé entre le processeur de l'objet et l'unité de traitement.
- Dans un mode de réalisation particulièrement avantageux, l'écran de l'objet portable par exemple clé USB est constitué lui même d'une carte à puce comportant un afficheur en surface; L'afficheur couvre de préférence une grande partie d'une face verso ou recto de la carte voire la totalité, tandis que l'interface débouche sur la face opposée de préférence.
- L'interactivité peut être obtenue par exemple par des capteurs de pression ou autre, capacitif, résistifs, magnétiques placés derrière ou combinés à un écran souple.
- Grâce à l'invention, l'utilisateur peut ainsi dialoguer avec son objet portable en toute confiance directement. L'objet a l'avantage d'économiser un clavier ou autre interface homme machine et offre une surface utile d'affichage plus grande ou de rendre l'objet plus petit par exemple au format Mini UICC ou mini SIM.

L'objet est utilisable à la réalisation de transactions électroniques sécurisées, en association avec un lecteur connecté à ordinateur hôte et relié à un réseau de communication, des informations personnelles ou liées à la transaction étant saisies de manière sécurisée sur l'écran sensitif de l'objet portable.

Le cas échéant, l'objet portable comprend un programme ou protocole permettant de dialoguer avec une unité distante, notamment pour :
- afficher des données d'une transaction en provenance d'une unité distante pour approbation et/ ou contrôle par interaction sur une zone affichée sur l'écran.
- afficher au moins un mode de paiement et de transmettre un mode sélectionné par interaction sur une zone affichée sur l'écran.
- afficher au moins un clavier interactif de saisie d'un code PIN et de transmettre pour vérification le code PIN sélectionné par interaction avec les zones affichées sur l'écran.
- afficher au moins une zone d'écriture et de transmettre pour vérification des paramètres de saisie de l'écriture par interaction avec l'écran. Pour la transaction électronique, les informations peuvent être de préférence transmises directement sur le réseau via un canal sécurisé établi entre la carte et une unité distante connecté au réseau. Des jeux de commande sont transmis par l'unité distante et interprétés directement par la carte.

Enfin, dans un mode de réalisation permettant d'optimiser à bon escient la surface de l'objet à la fois pour un affichage et pour des données imprimées au sens large (gravées au laser..), on utilise le fait que des couches OLED ou papier électronique pourraient être translucides ou transparentes, notamment lorsqu'il n'y a pas du courant; les couches 4a, 4b, et/ou 6a, 6b en ces matériaux en principe transparents ou translucides (mais non nécessairement) pourraient alors comprendre des éléments de sécurité tels que des logos, des graphiques et hologrammes, guilloches imprimés ou gravées en dessous, dedans ou dessus au moins une couche de l'afficheur

Ce marquage peut être effectué de manière conventionnelle pour renforcer la sécurité de la carte ou objet. Ces éléments de sécurité peuvent être réalisés par des moyens tels que laser de personnalisation. Ainsi, la carte ou support peut comprendre sur une des faces (ou couches) ou de manière visible à travers et par transparence des couches, tous les éléments nécessaires classiques de sécurisation graphique.

Les éléments de sécurité peuvent correspondre à une information affichée ou lui être complémentaire. Les éléments de sécurité marqués dans l'afficheur constituent des éléments visuels complémentaires à des éléments graphiques affichés électroniquement. Ainsi par exemple, tout ou partie d'un contour ou élément (yeux, nez...) d'un portrait est gravé par laser sur une couche de l'afficheur. Une partie de lettre ou de chiffre ou d'un mot est gravée tandis que l'autre partie est stockée dans un microcircuit sécurisé et affichée en complément de l'information marquée sur l'afficheur. En effectue ainsi un appairage de sécurité de l'afficheur à la puce. Cela permet d'éviter une fraude consistant à substituer l'un ou l'autre par un élément falsifié.

La surface transparente de l'afficheur peut recouvrir des graphismes qui pourraient éventuellement être visibles à travers l'afficheur.

Ainsi, on peut utiliser une même surface d'affichage de données électroniques en regard de données graphiques notamment de personnalisation à travers des couches d'écran et/ou de corps de carte ou de feuillet transparent ou translucide.

## Revendications

1. Objet personnel portable intelligent de sécurité (1a, 1b, 1c, 1d) comportant des données de personnalisation graphique (2) visibles depuis une face de l'objet, les données de personnalisation graphique étant présentées par affichage électronique,
ledit objet comportant des moyens de contrôle d'affichage (100, 200) pour afficher selon un mode prioritaire lesdites données de personnalisation graphique et afficher d'autres données selon au moins un autre mode, lesdits moyens de contrôle étant aptes à maintenir ou à revenir à un mode prioritaire d'affichage des données de personnalisation graphique dans certaines conditions prédéterminées détectées, **caractérisé en ce que** lesdites conditions prédéterminées comprennent un niveau de batterie faible.

2. Objet personnel selon l'une des revendications précédentes, **caractérisé en ce qu'**il constitue un objet d'authentification visuel d'une personne, les données graphiques comprenant une photographie de la personne.

3. Objet personnel selon l'une quelconque des revendications précédentes, **caractérisé en ce qu'**il est apte à réaliser une fonction de contrôle d'accès logique sur un réseau de communication et **en ce qu'**il contient des droits d'accès pour un accès physique notamment via une communication radiofréquence avec un lecteur.

4. Objet personnel selon l'une quelconque des revendications précédentes, caractérisé en ce les données graphiques sont stockées de manière sécurisée dans des moyens de stockage internes ou externes lui étant reliés.

5. Objet personnel selon l'une des revendications précédentes, **caractérisé en ce qu'**il constitue ou représente au moins un document officiel (1c, 1d).

6. Objet personnel selon l'une quelconque des revendications précédentes, **caractérisé en ce qu'**il est choisi parmi une clé USB (1a), une carte à puce (1c, 1d), un assistant personnel (PDA), un téléphone portable.

7. Objet personnel selon l'une quelconque des revendications précédentes, **caractérisé en ce qu'**il comporte des moyens de configuration et/ou détection des conditions prédéterminées telles que niveau de batterie faible, défaillance mécanique, position verticale, micro affichage ou affichage multiple, connexion à source d'énergie.

8. Objet personnel selon l'une quelconque des revendications précédentes, **caractérisé en ce que** l'afficheur est bistable tel que le papier électronique (E-Paper).

9. Objet personnel selon l'une quelconque des revendications précédentes, **caractérisé en ce que** l'afficheur est sensitif.

10. Objet personnel selon l'une quelconque des revendications précédentes, **caractérisé en ce que** l'afficheur comporte des couches (4a, 4b et/ou 6a, 6b) comprenant des éléments de sécurité marqués tels que des logos, des graphiques et hologrammes, guilloches.

11. Objet personnel selon la revendication précédente, **caractérisé en ce que** les éléments de sécurité constituent des éléments visuels complémentaires à des éléments graphiques affichés électroniquement.

12. Dispositif comportant une interface connectée à un afficheur **caractérisé en ce que** l'afficheur comprend un objet selon l'une des revendications précédentes.

13. Dispositif selon la revendication précédente, **caractérisé en ce que** l'afficheur est amovible par rapport au dispositif et constitue un afficheur supplémentaire du dispositif et/ou son propre unique afficheur.

14. Procédé de personnalisation graphique d'objet personnel portable intelligent de sécurité, ledit procédé comportant une étape consistant à transférer des données de personnalisation graphiques visibles depuis une face de l'objet, **caractérisé en ce que** les données sont transférées sous forme numérique et/ou sous forme de marquage de personnalisation sur un objet selon l'une des revendications 1 à 11 et les données numériques sont présentées vis à vis de l'extérieur par affichage électronique.

15. Utilisation de l'objet portable selon l'une des revendications 1 à 11,
- à la réalisation de transactions électroniques sécurisées, en association avec un lecteur connecté à ordinateur hôte et relié à un réseau de communication, des informations personnelles ou liées à la transaction étant saisies de manière sécurisée sur l'écran sensitif de l'objet portable;
- et/ou au contrôle d'accès physique mettant en oeuvre une double étape de contrôle comprenant un contrôle d'authentification du titulaire par l'objet portable notamment par biométrie et un contrôle d'accès physique de droits d'accès contenus dans l'objet portable;
- et/ou à l'authentification et contrôle visuel d'au moins une personne, l'authentification;
- et/ou au contrôle d'accès logique d'au moins un utilisateur;
- et/ou à l'affichage de données autres que données de personnalisation graphique.

16. Utilisation de l'objet portable selon la revendication précédente, **caractérisé en ce que** pour la transaction électronique, les informations sont transmises directement sur le réseau via un canal sécurisé établi entre la carte et une unité distante connecté au réseau.

## Patentansprüche

1. Tragbares, intelligentes, persönliches Sicherheitsobjekt (1a, 1b, 1c, 1d) mit grafischen Personalisierungsdaten (2), die von einer Seite des Objekts aus sichtbar sind, wobei die grafischen Personalisierungsdaten durch eine elektronische Anzeige dargestellt werden, wobei besagtes Objekt Anzeigekontrollmittel (100, 200) zur Anzeige besagter grafischer Personalisierungsdaten nach einem vorrangigen Modus und zur Anzeige anderer Daten nach mindestens einem anderen Modus aufweist, wobei besagte Kontrollmittel in der Lage sind, unter bestimmten vordefinierten, erkannten Bedingungen einen vorrangigen Anzeigemodus für grafische Personalisierungsdaten aufrechtzuerhalten bzw. zu diesem zurückzukehren, **dadurch gekennzeichnet, dass** es sich bei besagten vordefinierte Bedingungen um einen geringen Batterieladestand handelt.

2. Persönliches Objekt nach einem der vorhergehenden Ansprüche, **dadurch gekennzeichnet, dass** es ein optisches Authentifizierungsobjekt einer Person ist, wobei die grafischen Daten eine Fotografie der Person enthalten.

3. Persönliches Objekt nach einem der vorhergehenden Ansprüche, **dadurch gekennzeichnet, dass** es in der Lage ist, die Funktion der logischen Zugangskontrolle in einem Kommunikationsnetz auszuüben, und dadurch, dass es Zugangsberechtigungen für einen physischen Zugang insbesondere über eine Funkfrequenzverbindung zu einem Lesegerät enthält.

4. Persönliches Objekt nach einem der vorhergehenden Ansprüche, **dadurch gekennzeichnet, dass** die grafischen Daten in internen oder externen, mit ihm verbundenen Speichermitteln sicher gespeichert sind.

5. Persönliches Objekt nach einem der vorhergehenden Ansprüche, **dadurch gekennzeichnet, dass** es mindestens ein offizielles Dokument ist oder darstellt (1c, 1d).

6. Persönliches Objekt nach einem der vorhergehenden Ansprüche, **dadurch gekennzeichnet, dass** es aus einem USB-Stick (1a), einer Chipkarte (1c, 1d), einem Personal Assistant (PDA) und einem Mobiltelefon ausgewählt wird.

7. Persönliches Objekt nach einem der vorhergehenden Ansprüche, **dadurch gekennzeichnet, dass** es Konfigurations- und/oder Detektionsmittel für die vordefinierten Bedingungen, wie zum Beispiel einen geringen Batterieladestand, eine mechanische Störung, eine senkrechte Position, eine Mikroanzeige oder eine Mehrfachanzeige, oder einen Anschluss an eine Energiequelle aufweist.

8. Persönliches Objekt nach einem der vorhergehenden Ansprüche, **dadurch gekennzeichnet, dass** die Anzeige bistabil ist, wie zum Beispiel elektronisches Papier (E-Paper).

9. Persönliches Objekt nach einem der vorhergehenden Ansprüche, **dadurch gekennzeichnet, dass** die Anzeige sensorisch ist.

10. Persönliches Objekt nach einem der vorhergehenden Ansprüche, **dadurch gekennzeichnet, dass** die Anzeige Schichten (4a, 4b und/oder 6a, 6b) mit gekennzeichneten Sicherheitselementen, wie zum Beispiel Logos, Grafiken, Hologrammen oder guillochierte Überdrucken aufweist.

11. Persönliches Objekt nach dem vorhergehenden Anspruch, **dadurch gekennzeichnet, dass** die Sicherheitselemente optische Elemente sind, welche die elektronisch angezeigten grafischen Elemente ergänzen.

12. Vorrichtung, welche eine mit einer Anzeige verbundene Schnittstelle umfasst, **dadurch gekennzeichnet, dass** die Anzeige ein Objekt nach einem der vorhergehenden Ansprüche enthält.

13. Vorrichtung nach dem vorhergehenden Anspruch, **dadurch gekennzeichnet, dass** die Anzeige von der Vorrichtung abnehmbar ist und eine zusätzliche Anzeige der Vorrichtung und/oder eigenständige Anzeige bildet.

14. Grafisches Personalisierungsverfahren für ein persönliches tragbares, intelligentes Sicherheitsobjekt, wobei das Verfahren einen Schritt bestehend aus dem Transfer der von einer Seite des Objekts sichtbaren grafischen Personalisierungsdaten enthält, **dadurch gekennzeichnet, dass** die Daten in digitaler Form und/oder in Form einer Personalisierungskennzeichnung auf einem Objekt nach einem der Ansprüche 1 bis 11 übermittelt werden, und die digitalen Daten nach außen hin durch eine elektronische Anzeige dargestellt sind.

15. Benutzung des tragbaren Objekts nach einem der Ansprüche 1 bis 11,
- bei der Durchführung elektronischer gesicherter Transaktionen in Verbindung mit einer Lesegerät, das an einen Hostcomputer angeschlossen und mit einem Kommunikationsnetz verbunden ist, wobei persönliche Informationen oder Informationen im Zusammenhang mit der Transaktion auf dem sensorischen Bildschirm des tragbaren Objekts sicher erfasst werden können;
- und/oder für die physische Zugangskontrolle, bei der zwei Kontrollschritte bestehend aus einer Authentifizierungskontrolle des Inhabers über das tragbare Objekt insbesondere durch Biometrie, und eine physische Zugangskontrolle von Zugangsberechtigungen, die in besagten tragbaren Objekt enthalten sind, verwendet werden;
- und/oder für die Authentifizierung und Sichtkontrolle von mindestens einer Person;
- und/oder die logische Zugangskontrolle von mindestens einem Benutzer;
- und/oder die Anzeige von Daten, die keine grafischen Personalisierungsdaten sind.

16. Benutzung des tragbaren Objekts nach dem vorhergehenden Anspruch, **dadurch gekennzeichnet, dass** die Informationen bei der elektronischen Transaktion direkt über das Netzwerk mittels eines gesicherten Kanals zwischen der Karte und einem mit dem Netz verbundenen Remote-Gerät übermittelt werden.

## Claims

1. Personal portable intelligent security object (1a, 1b, 1c, 1d) comprising graphic personalisation data (2) visible from a face of the object, the graphic personalisation data being presented by electronic display, said object comprising display control means (100, 200) for displaying according to a priority mode, said graphic personalisation data and displaying other data according to at least one other mode, said control means being capable of maintaining or returning to a priority mode for displaying graphic personalisation data under certain predetermined detected conditions, **characterised in that** said predetermined conditions comprise a low battery level.

2. Personal object according to one of the preceding claims, **characterised in that** it constitutes an object visually authenticating a person, the graphic data comprising a photograph of the person.

3. Personal object according to any one of the preceding claims, **characterised in that** it is capable of carrying out a logical access control function on a communication network and **in that** it contains access rights for a physical access, in particular, via radiofrequency communication with a reader.

4. Personal object according to any one of the preceding claims, **characterised in that** the graphic data are stored securely in the internal or external storage means being connected to it.

5. Personal object according to one of the preceding claims, **characterised in that** it constitutes or represents at least one official document (1c, 1d).

6. Personal object according to any one of the preceding claims, **characterised in that** it is chosen among a USB stick (1a), a smart card (1c, 1d), a personal assistant (PDA), a mobile telephone.

7. Personal object according to any one of the preceding claims, **characterised in that** it comprises means for configuring and/or detecting the predetermined conditions such as low battery level, mechanical failure, vertical position, micro-display or multiple display, connection to an energy source.

8. Person object according to any one of the preceding claims, **characterised in that** the display unit is bistable such as e-paper.

9. Personal object according to any one of the preceding claims, **characterised in that** the display unit is sensitive.

10. Personal object according to any one of the preceding claims, **characterised in that** the display unit comprises layers (4a, 4b and/or 6a, 6b) comprising marked security elements such as logos, graphics and holograms, guilloches.

11. Personal object according to the preceding claim, **characterised in that** the security elements constitute additional visual elements with graphic elements displayed electronically.

12. Device comprising an interface connected to a display unit, **characterised in that** the display unit comprises an object according to one of the preceding claims.

13. Device according to the preceding claim, **characterised in that** the display unit can be removed in relation to the device and constitutes an additional display unit of the device and/or its own unique display unit.

14. Method for graphically personalising a personal portable intelligent security object, said method comprising a step consisting of transferring graphic personalisation data, visible from a face of the object, **characterised in that** the data are transferred in digital form and/or in personalisation marking form on an object according to one of claims 1 to 11 and the digital data are presented opposite the exterior by electronic display.

15. Use of the portable object according to one of claims 1 to 11,
- to carry out secure electronic transactions, in association with a read connected to a host computer and connected to a communication network, personal information, or connected to the transaction being entered securely on the sensitive screen of the portable object;
- and/or to control physical access, implementing a two-way control step comprising an authentication control of the owner through the portable object, in particular, by biometry and a physical access control of access rights contained in the portable object;
- and/or to authenticate and visually control at least one person, the authentication;
- and/or to control the logical access of at least one user;
- and/or to display data other than graphic personalisation data.

16. Use of the portable object according to the preceding claim, **characterised in that** for the electronic transaction, the information is transmitted directly over the network via a secure channel created between the card and a remote unit connected to the network.
